# EUROPÄISCHE PATENTSCHRIFT

(11) **EP 3 158 224 B1**
(45) Veröffentlichungstag und Bekanntmachung des Hinweises auf die Patenterteilung: **28.11.2018**
(21) Anmeldenummer: 15738828.1
(22) Anmeldetag: 12.05.2015
(51) Int. Cl.: F16F 15/14

(54) **DREHSCHWINGUNGSDÄMPFER**
TORSIONAL VIBRATION DAMPER
AMORTISSEUR DE VIBRATIONS DE TORSION

(30) Priorität: 18.06.2014 DE 102014211728
(43) Veröffentlichungstag der Anmeldung: 26.04.2017
(73) Patentinhaber: Schaeffler Technologies AG & Co. KG, 91074 Herzogenaurach (DE)
(72) Erfinder: MENDE, Hartmut, 77815 Bühl (DE); SCHILLING, Kornelia, 70825 Korntal-Münchingen (DE)
(86) Internationale Anmeldenummer: PCT/DE2015/200310
(87) Internationale Veröffentlichungsnummer: WO 2015/192838

(56) Entgegenhaltungen:
- WO-A1-2012/083928
- DE-A1-102009 042 156

## Beschreibung

Die Erfindung betrifft einen Drehschwingungsdämpfer, wie insbesondere ein Fliehkraftpendel, zur Dämpfung von Drehschwingungen insbesondere im Antriebsstrang eines Kraftfahrzeugs.

Fliehkraftpendel als Drehschwingungsdämpfersind im Stand der Technik vielfältig bekannt. Dabei ist ein Flansch vorgesehen und beiderseits dessen sind Fliehgewichte verlagerbar angeordnet. Dabei sind die Fliehgewichte mittels Rollenelementen an dem Flansch verlagerbar angeordnet. Der Flansch und die Fliehgewichte weisen Führungsbahnen auf, in welche die Rollenelemente eingreifen, so dass dadurch die Fliehgewichte relativ zum Flansch verlagerbar gelagert sind. Auch sind zum Teil Dämpfungselemente vorgesehen, welche die Anschlagdämpfung zwischen dem Flansch und dem Fliehgewicht dämpfen, was insbesondere bei Start-Stopp-Vorgängen zu einer Verbesserung des Schwingungsdämpfung und der Geräuschreduzierung führt.

Durch die gegebene Geometrie rutscht bei diesen Fliehkraftpendeln der Schwerpunkt der Fliehgewichte als Pendelmassen radial nach innen und unterhalb bzw. radial innerhalb des Bahnaufstandspunkts der Rollenelemente, so dass die Fliehgewichte einen instabilen Schwerpunkt aufweisen und zum Kippen neigen.

Es ist die Aufgabe der vorliegenden Erfindung, einen Drehschwingungstilgerzu schaffen, welcher gegenüber dem Stand der Technik verbessert ist.

Die Aufgabe der Erfindung wird mit den Merkmalen von Anspruch 1 gelöst.

Ein Ausführungsbeispiel der Erfindung betrifft einen Drehschwingungsdämpfer mit einem Flansch und an dem Flansch verlagerbar angeordneten Fliehgewichten, wobei Rollenelemente vorgesehen sind, welche die Fliehgewichte führen, wobei der Flansch und die Fliehgewichte Führungsbahnen aufweisen, in welche die Rollenelemente eingreifen, wobei an zumindest einem der Fliehgewichte Mittel zur Schwerpunkterhöhung vorgesehen sind. Dadurch wird erreicht, dass der Schwerpunkt im Wesentlichen in jeder Betriebsphase radial außerhalb des Aufstandspunkts der Fliehgewichte an den Rollenelementen ist, so dass eine verbesserte Führung des Fliehgewichts erreicht wird. Die Schwerpunkterhöhung wird dabei in radialer Richtung bewirkt, also wird der Schwerpunkt nach radial außen verlagert, wobei ein Mittel zur Schwerpunkterhöhung zumindest eine Lasche ist, die von dem zumindest einen Fliehgewicht in axialer und/oder radialer Richtung abragt. Dadurch wird ein zusätzliches Massenelement als Lasche geschaffen bzw. vorgesehen, welches den Schwerpunkt nach radial außen verschiebt.

Gemäß eines Ausführungsbeispiels der Erfindung ist es zweckmäßig, wenn an jedem Fliehgewicht Mittel zur Schwerpunkterhöhung vorgesehen sind. So wird die Führung an jedem Fliehgewicht verbessert.

Erfindungsgemäß ist es vorteilhaft, wenn eine Mehrzahl von Laschen an dem Fliehgewicht angeordnet ist, wobei die Laschen in die gleiche oder in unterschiedliche Richtungen abragen. So können die Laschen bauraumsparend in verschiedene Richtungen oder in die gleiche Richtung abragen.

Dabei ist es besonders vorteilhaft, wenn die zumindest eine Lasche oder die jeweilige Lasche in Richtung auf den Flansch vorragt und ggf. diesen übergreift. Dadurch wird der Bauraum für die Lasche gering gehalten. Alternativ könnte die Lasche auch als Anschlag am Flansch dienen, wobei dann vorzugsweise auch Dämpfungsmittel vorgesehen sein können, welche den Anschlag dämpfen können.

Vorteilhaft ist die Lasche als integrales Element des Fliehgewichts ausgebildet und als Teil des Fliehgewichts von diesem abragend ausgebildet. So kann das Fliehgewicht beispielsweise als Blechteil ausgebildet sein, so dass die Lasche als von dem Blechteil abragendesElement ausgebildet ist. Alternativ kann die Lasche auch getrennt ausgebildet hergestellt und danach mit dem Fliehgewicht verbunden sein.

Besonders vorteilhaft ist es, wenn die zumindest eine Lasche am radial außen liegenden Randbereich des Fliehgewichts abragt Dadurch kann eine besonders positive Wirkung auf die Verlagerung des Schwerpunkts nach radial außen bewirkt werden, wobei gleichzeitig der Bauraum optimal genutzt werden kann.

Ebenso ist es zweckmäßig, wenn die Laschen von sich am Flansch gegenüberliegenden Fliehgewichten in Umfangsrichtung versetzt zueinander angeordnet sind. So kann beiderseits des Flanschs jeweils sich gegenüberliegend ein Fliehgewicht vorgesehen sein, welche jeweils zumindest eine Lasche aufweisen. Damit die Laschen sich nicht gegenseitig stören, sind die Laschen vorteilhaft versetzt zueinander angeordnet.

Auch ist es vorteilhaft, wenn die Laschen von sich am Flansch gegenüberliegenden Fliehgewichten jeweils in axialer Richtung auf den Flansch vorstehend abragen. So kann der Bauraum vorteilhaft ausgenutzt werden. Besonders vorteilhaft ist es dabei, wenn die Laschen den Flansch zumindest teilweise übergreifen.

Gemäß eines weiteren Gedankens ist es vorteilhaft, wenn ein Mittel zur Schwerpunkterhöhung zumindest eine Aussparung ist, die in dem zumindest einen Fliehgewicht eingebracht ist und sich radialer Richtung erstreckt. ,Wird die Aussparung zweckmäßig gesetzt und dimensioniert, verschiebt sich dadurch der Schwerpunkt des Fliehgewichts ebenso nach radial außen.

Auch ist es vorteilhaft, wenn eine Mehrzahl von Aussparungen in dem Fliehgewicht angeordnet ist. Dadurch kann die Lage des Schwerpunkts spezifischer definiert werden, insbesondere wenn für eine einzige Aussparung kein Platz ist oder die Stabilität des Fliehgewichts dies verhindert.

Auch ist es vorteilhaft, wenn die zumindest eine Aussparung im radial innen liegenden Randbereich des Fliehgewichts ausgebildet sind.

Die vorliegende Erfindung wird nachfolgend anhand bevorzugter Ausführungsbeispiele in Verbindung mit den zugehörigen Figuren näher erläutert:
Dabei zeigt:
- Figur 1: eine schematische Darstellung eines Ausschnitts eines Drehschwingungsdämpfers mit Flansch und einem Fliehgewicht,
- Figur 2: eine schematische Darstellung eines Ausschnitts eines erfindungsgemäßen Drehschwingungsdämpfers mit Flansch und einem Fliehgewicht,
- Figur 3: eine schematische Darstellung eines Ausschnitts eines erfindungsgemäßen Drehschwingungsdämpfers mit Flansch und zwei Fliehgewichten in einer Explosionsdarstellung,
- Figur 4: eine schematische Darstellung eines Ausschnitts eines nicht erfindungsge-mäßen Drehschwingungsdämpfers mit Flansch und einem Fliehgewicht,
- Figur 5: eine schematische Darstellung eines Ausschnitts eines nicht erfindungsge-mäßen Drehschwingungsdämpfers mit Flansch und zwei Fliehgewichten in einer Explosionsdarstellung,
- Figur 6: eine schematische Darstellung eines Ausschnitts eines erfindungsgemäßen Drehschwingungsdämpfers mit Flansch und einem Fliehgewicht, und
- Figur 7: eine schematische Darstellung eines Ausschnitts eines erfindungsgemäßen Drehschwingungsdämpfers mit Flansch und zwei Fliehgewichten in einer Explosionsdarstellung.

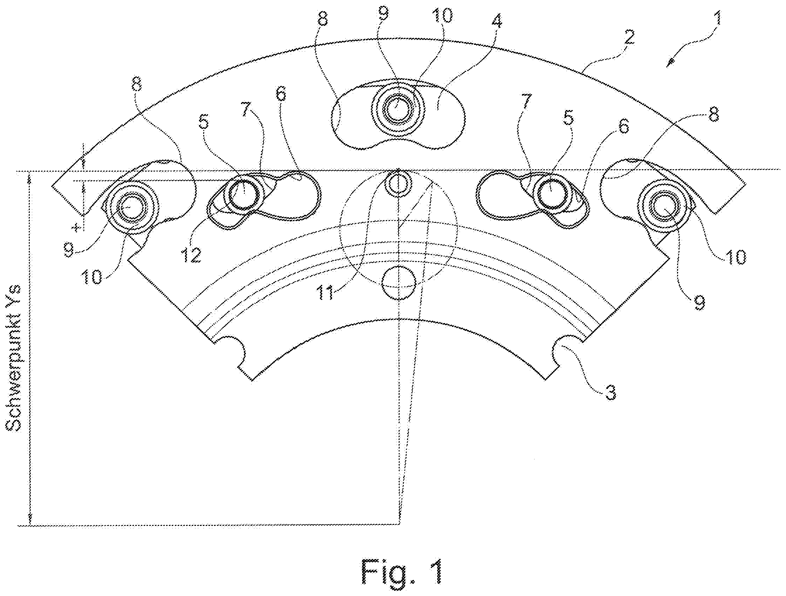

Die Figur 1 zeigt in einer schematischen Darstellung einen Teil einesDrehschwingungsdämpfers1, wie ein Fliehkraftpendel. Dabei dämpft oder tilgt der Drehschwingungsdämpfer Drehschwingungen, weshalb er auch als Drehschwingungstilger bezeichnet werden kann.

Der Drehschwingungsdämpfer1 weist einen Flansch 2 auf, der vorzugsweise ringförmig ausgebildet ist. Der Flansch 2 weist radial innen Öffnungen 3 auf, mittels welchem der Flansch 2 an einem anderen Bauteil befestigt werden kann, wie beispielsweise vernietet werden kann. An dem Flansch 2 sind verlagerbar angeordnete Fliehgewichte 4 vorgesehen, wobei in Figur 1 nur ein Teil des Drehschwingungsdämpfers gezeigt ist, so dass nur ein Fliehgewicht 4zu erkennen ist.

Zur verlagerbaren Lagerung der Fliehgewichte4sind Rollenelemente 5 vorgesehen, welche die Fliehgewichte 4an dem Flansch 2 führen, wobei der Flansch 2 und die Fliehgewichte 4 Führungsbahnen 6, 7 aufweisen, in welche die Rollenelemente 5 eingreifen und die Verlagerung der Fliehgewichte 4 relativ zum Flansch 2 führen. Die Krümmung der Führungsbahnen 6, 7 in Umfangsrichtung und in radialer Richtung definiert die Bewegungsbahn der Fliehgewichte 4 und damit die Dämpfung bzw. Tilgung des Fliehkraftpendels.

Dabei weist ein Rollenelement 5vorteilhaft einen mittleren Tragbereich und zwei endseitige Tragbereiche auf, wobei der mittlere Tragbereich in eine Führungsbahn 6 des Flanschs 2 eingreift und die beiden endseitigen Tragbereiche jeweils in eine Führungsbahn 7 eines Fliehgewichts 4 eingreifen.

An dem Flansch 2 sind Anschlagmittel 8als Anschlagkontur angeordnet. An dem Fliehgewicht sind Vorsprünge 9 mit Dämpfungselementen 10 vorgesehen, welche mit den Anschlagmitteln 8 als Anschlagkontur wechselwirken können, um die Bewegung der Fliehgewichte im Anschlagbereich zu dämpfen.

Der Schwerpunkt 11 des Fliehgewichts kann dabei in einer Ausgestaltung nach dem Stand der Technik auch unterhalb des Aufstandspunkts 12 zwischen Fliehgewicht 4 und Rollenelement 5 gelangen, was nachteilig ist. In Figur 1 ist das Fliehgewicht nicht ausgelenkt dargestellt, weshalb der Schwerpunkt 11 noch oberhalb des Bahnaufstandspunkts 12 liegt. Wird das Fliehgewicht jedoch in Umfangsrichtung verlagert, also in Figur 1 seitlich verlagert, so kann der Schwerpunkt 11 unter den Punkt 12 verschoben werden.

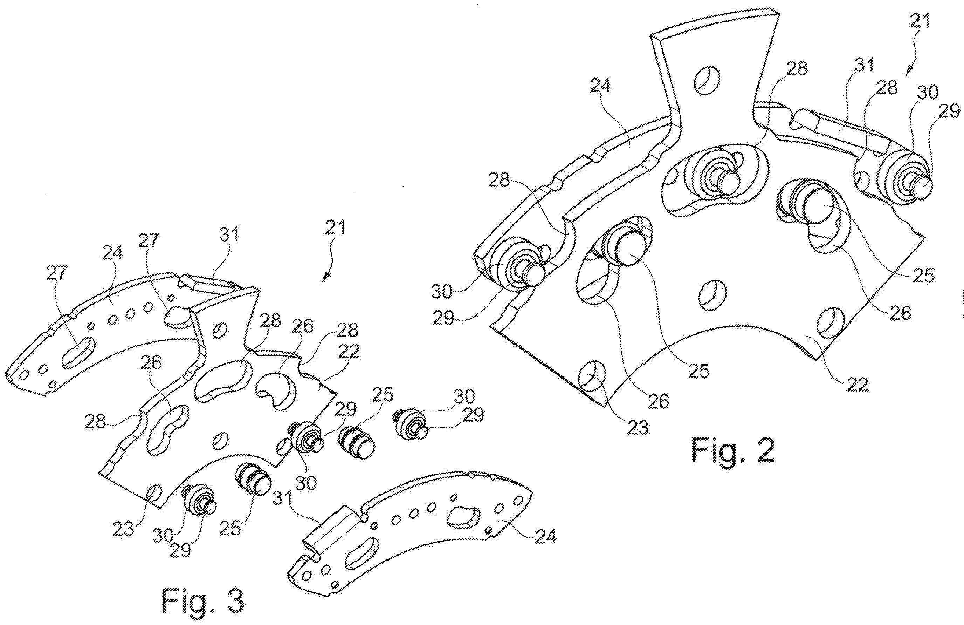

Die Figuren 2 und 3 zeigenjeweils in einer schematischen perspektivischen Darstellung bzw. in einer Explosionsdarstellung einen Teil eines erfindungsgemäßen Drehschwingungsdämpfers 21, wie ein Fliehkraftpendel. Der Drehschwingungsdämpfer 21 weist einen Flansch 22 auf, der vorzugsweise ringförmig ausgebildet ist. Der Flansch 22 weist optional ebenso radial innen Öffnungen 23 auf, mittels welchem der Flansch 22 an einem anderen Bauteil befestigt werden kann, wie beispielsweise vernietet werden kann. Alternativ kann der Flansch jedoch auch verstemmt oder verschweißt oder anderweitig befestigt werden.

An dem Flansch 22 sind verlagerbar angeordnete Fliehgewichte 24 vorgesehen, wobei in Figur 2 nur ein Teil des Drehschwingungsdämpfers gezeigt ist, so dass nur ein Fliehgewicht 24 zu erkennen ist. In Figur 3 sind zwei beidseits des Flansches 21 angeordnete Fliehgewichte 24 gezeigt.

Zur verlagerbaren Lagerung der Fliehgewichte 24 sind Rollenelemente 25 vorgesehen, welche die Fliehgewichte 24 an dem Flansch 22 führen, wobei der Flansch 22 und die Fliehgewichte 24 Führungsbahnen 26, 27 aufweisen, in welche die Rollenelemente 25 eingreifen und die Verlagerung der Fliehgewichte 24 relativ zum Flansch 22 führen. Die Krümmung der Führungsbahnen 26, 27 in Umfangsrichtung und in radialer Richtung definiert wiederum die Bewegungsbahn der Fliehgewichte 24 und damit die Dämpfung bzw. Tilgung des Fliehkraftpendels.

Insbesondere in Figur 3 ist zu erkennen, dass ein Rollenelement 25 vorteilhaft einen mittleren Tragbereich und zwei endseitige Tragbereiche aufweist, wobei der mittlere Tragbereich in eine Führungsbahn 26 des Flanschs 22 eingreift und die beiden endseitigen Tragbereiche jeweils in eine Führungsbahn 27 eines Fliehgewichts 24 eingreifen.An dem Flansch 22 sind Anschlagmittel 28 als Anschlagkontur angeordnet. An dem Fliehgewicht sind Vorsprünge 29 mit Dämpfungselementen 30 vorgesehen, welche mit den Anschlagmitteln 28 als Anschlagkontur wechselwirken können, um die Bewegung der Fliehgewichte im Anschlagbereich zu dämpfen. Dabei kann ein Vorsprung 29 durchaus mit den beiden gegenüberliegenden Fliehgewichten 24 verbunden sein.

Zur Erhöhung des Schwerpunkts ist an den Fliehgewichten 24 jeweils eine Lasche 31 angeordnet, welche am radial außen liegenden Randbereich des Fliehgewichts sich an dieses anschließt und seitlich in axialer Richtung abragt. Die Lasche 31 ist als Teil des Fliehgewichts 24 ausgebildet und von dieser in lateraler Richtung umgebogen. Alternativ kann die Lasche auch an dem Fliehgewicht befestigt sein. Die Lasche ist dabei so ausgebildet, dass sie eine Verlängerung nach radial außen bildet, die dann umgebogen ist.Die Kontur der Lasche kann jedoch auch anders gewählt werden, wobei auch eine Mehrzahl von Laschen vorgesehen sein kann.

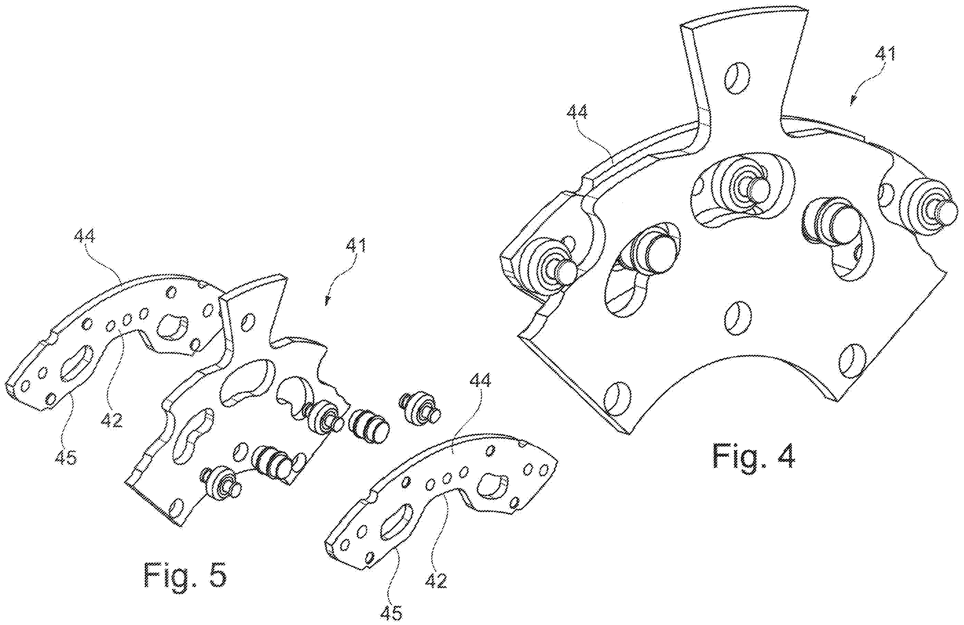

Die Figuren 4 und 5 zeigen eine nicht erfindungsgemäße Gestaltung eines Drehschwingungsdämpfers 41, welcher im Wesentlichen dem Drehschwingungsdämpfer 21 der Figuren 2 und 3 identisch ist, wobei jedoch statt der Lasche 31 radial außen an dem Fliehgewicht 24 nun radial innen an dem Fliehgewicht 44 eine Aussparung 42 vorgesehen ist. Die Aussparung 42 ist etwa trapezförmig ausgebildet und ist mittig des Fliehgewichts 44 angeordnet. Die Tiefe der Aussparung reicht vom radial inneren Rand 45 bis etwa 1/3 bis ½ der radialen Ausdehnung des Fliehgewichts. Die Kontur der Aussparung kann jedoch auch anders gewählt werden, wobei auch eine Mehrzahl von Aussparungen vorgesehen sein kann.

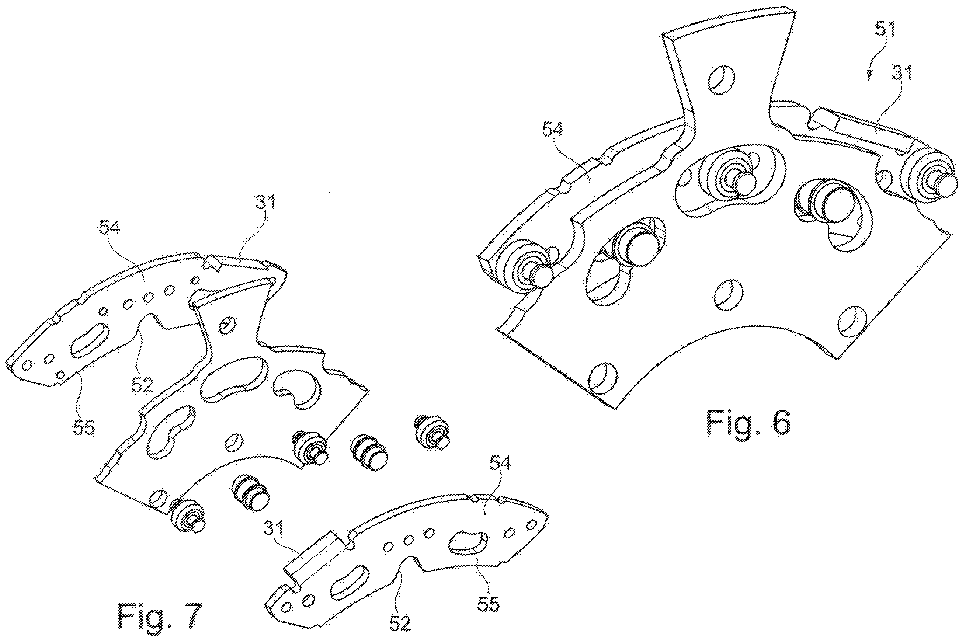

Die Figuren 6 und 7 zeigen eine Gestaltung eines alternativen Drehschwingungsdämpfers 51, welcher im Wesentlichen dem Drehschwingungsdämpfer 21 der Figuren 2 und 3 bzw. 4 und 5 identisch ist, wobei jedoch zusätzlich zu der Lasche 31 radial außen an dem Fliehgewicht 54 nun radial innen an dem Fliehgewicht 54 auch eine Aussparung 52 vorgesehen ist. Die Aussparung 52 ist ebenso etwa trapezförmig ausgebildet und ist mittig des Fliehgewichts 54 angeordnet. Die Tiefe der Aussparung reicht vom radial inneren Rand 55 bis etwa 1/3 bis ½ der radialen Ausdehnung des Fliehgewichts. Die Kontur der Aussparung kann jedoch auch anders gewählt werden, wobei auch eine Mehrzahl von Aussparungen vorgesehen sein kann.

Bevorzugt stehen die Laschen etwa 90° zur Ebene des Fliehgewichts oder des Flanschs vor, wobei auch andere Winkel vorteilhaft gewählt werden können.

### Bezuqszeichenliste

- 1: Drehschwingungsdämpfer
- 2: Flansch
- 3: Öffnung
- 4: Fliehgewicht
- 5: Rollenelement
- 6: Führungsbahn
- 7: Führungsbahn
- 8: Anschlagmittel
- 9: Vorsprung
- 10: Dämpfungselement
- 11: Schwerpunkt
- 12: Bahnaufstandspunkt
- 21: Drehschwingungsdämpfer
- 22: Flansch
- 23: Öffnung
- 24: Fliehgewicht
- 25: Rollenelement
- 26: Führungsbahn
- 27: Führungsbahn
- 28: Anschlagmittel
- 29: Vorsprung
- 30: Dämpfungselement
- 31: Lasche
- 41: Drehschwingungsdämpfer
- 42: Aussparung
- 44: Fliehgewicht
- 45: Rand
- 51: Drehschwingungsdämpfer
- 52: Aussparung
- 54: Fliehgewicht
- 55: Rand

## Patentansprüche

1. Drehschwingungsdämpfer(21) mit einem Flansch (22) und an dem Flansch (22) verlagerbar angeordneten Fliehgewichten (24,44,54), wobei Rollenelemente (25) vorgesehen sind, welche die Fliehgewichte (24,44,54) führen, wobei der Flansch (22) und die Fliehgewichte (24,44,54) Führungsbahnen (26,27) aufweisen, in welche die Rollenelemente (25) eingreifen, wobei an zumindest einem der Fliehgewichte (24,44,54) Mittel (31,42,52) zur Schwerpunkterhöhung vorgesehen sind, wobei ein Mittel (31) zur Schwerpunkterhöhung zumindest eine Lasche (31) ist, die von dem zumindest einen Fliehgewicht (24,54) in axialer und/oder radialer Richtung abragt.

2. Drehschwingungsdämpfernach Anspruch 1, **dadurch gekennzeichnet, dass** an jedem Fliehgewicht (24,44,54) Mittel (31,42,52) zur Schwerpunkterhöhung vorgesehen sind.

3. Drehschwingungsdämpfer nach einem der Ansprüche 1 oder 2, **dadurch gekennzeichnet, dass** eine Mehrzahl von Laschen (31) an dem Fliehgewicht (24,54) angeordnet sind, wobei die Laschen (31) in die gleiche oder in unterschiedliche Richtungen abragen.

4. Drehschwingungsdämpfer nach einem der Ansprüche 1 bis 3, **dadurch gekennzeichnet, dass** die zumindest eine Lasche (31) am radial außen liegenden Randbereich des Fliehgewichts (24,54) abragt.

5. Drehschwingungsdämpfer nach einem der Ansprüche 1 bis 4, **dadurch gekennzeichnet, dass** die Laschen (31) von sich am Flansch (22) gegenüberliegenden Fliehgewichten (24,54) in Umfangsrichtung versetzt zueinander angeordnet sind.

6. Drehschwingungsdämpfer nach einem der Ansprüche 1 bis 5, **dadurch gekennzeichnet, dass** die Laschen (31) von sich am Flansch (22) gegenüberliegenden Fliehgewichten(24,54) jeweilsin axialer Richtung auf den Flansch vorstehend abragen.

7. Drehschwingungsdämpfer nach einem der vorhergehenden Ansprüche, **dadurch gekennzeichnet, dass** ein Mittel (42,52) zur Schwerpunkterhöhung zumindest eine Aussparung (42,52) ist, die in dem zumindest einen Fliehgewicht eingebracht ist und sich radialer Richtung erstreckt.

8. Drehschwingungsdämpfer nach Anspruch 7, **dadurch gekennzeichnet, dass** eine Mehrzahl von Aussparungen (42,52) in dem Fliehgewicht (44,54) angeordnet ist.

9. Drehschwingungsdämpfer nach Anspruch 7 oder 8, **dadurch gekennzeichnet, dass** die zumindest eine Aussparung (42,52) im radial innen liegenden Randbereich des Fliehgewichts (44,54) ausgebildet sind.

## Claims

1. Rotary vibration damper (21) having a flange (22) and having centrifugal weights (24, 44, 54) arranged in displaceable fashion on the flange (22), wherein roller elements (25) are provided which guide the centrifugal weights (24, 44, 54), wherein the flange (22) and the centrifugal weights (24, 44, 54) have guide tracks (26, 27) into which the roller elements (25) engage, wherein means (31, 42, 52) for elevating a centre of gravity are provided on at least one of the centrifugal weights (24, 44, 54), wherein a means (31) for elevating a centre of gravity is at least one lug (31) which projects from the at least one centrifugal weight (24, 54) in an axial and/or radial direction.

2. Rotary vibration damper according to Claim 1, **characterized in that** means (31, 42, 52) for elevating a centre of gravity are provided on each centrifugal weight (24, 44, 54).

3. Rotary vibration damper according to either of Claims 1 and 2, **characterized in that** a multiplicity of lugs (31) are arranged on the centrifugal weight (24, 54), wherein the lugs (31) project in the same direction or in different directions.

4. Rotary vibration damper according to any of Claims 1 to 3, **characterized in that** the at least one lug (31) projects from the radially outer edge region of the centrifugal weight (24, 54).

5. Rotary vibration damper according to any of Claims 1 to 4, **characterized in that** the lugs (31) of centrifugal weights (24, 54) situated oppositely on the flange (22) are arranged offset with respect to one another in a circumferential direction.

6. Rotary vibration damper according to any of Claims 1 to 5, **characterized in that** the lugs (31) of centrifugal weights (24, 54) situated oppositely on the flange (22) each project so as to protrude in an axial direction towards the flange.

7. Rotary vibration damper according to one of the preceding claims, **characterized in that** a means (42, 52) for elevating a centre of gravity is at least one aperture (42, 52) which is formed in the at least one centrifugal weight and which extends in a radial direction.

8. Rotary vibration damper according to Claim 7, **characterized in that** a multiplicity of apertures (42, 52) are arranged in the centrifugal weight (44, 54) .

9. Rotary vibration damper according to Claim 7 or 8, **characterized in that** the at least one aperture (42, 52) is formed in the radially inner edge region of the centrifugal weight (44, 54).

## Revendications

1. Amortisseur d'oscillations de torsion (21) comprenant une bride (22) et des masselottes (24, 44, 54) disposées de manière déplaçable sur la bride (22), des éléments de roulement (25) étant prévus, lesquels guident les masselottes (24, 44, 54), la bride (22) et les masselotte (24, 44, 54) présentant des pistes de guidage (26, 27) dans lesquelles s'engagent les éléments de roulement (25), des moyens (31, 42, 52) pour rehausser le centre de gravité étant prévus au niveau d'au moins l'une des masselottes (24, 44, 54), un moyen (31) pour rehausser le centre de gravité étant au moins une patte (31) qui fait saillie depuis l'au moins une masselotte (24, 54) dans la direction axiale et/ou radiale.

2. Amortisseur d'oscillations de torsion selon la revendication 1, **caractérisé en ce que** des moyens (31, 42, 52) pour rehausser le centre de gravité sont prévus sur chaque masselotte (24, 44, 54).

3. Amortisseur d'oscillations de torsion selon l'une des revendications 1 et 2, **caractérisé en ce qu'**une pluralité de pattes (31) sont disposées sur la masselotte (24, 54), les pattes (31) faisant saillie dans la même direction ou dans des directions différentes.

4. Amortisseur d'oscillations de torsion selon l'une des revendications 1 à 3, **caractérisé en ce que** l'au moins une patte (31) fait saillie au niveau de la région de bord de la masselotte (24, 54) située radialement à l'extérieur.

5. Amortisseur d'oscillations de torsion selon l'une des revendications 1 à 4, **caractérisé en ce que** les pattes (31) de masselottes (24, 54) opposées sur la bride (22) sont disposées de manière décalée les unes par rapport aux autres dans la direction périphérique.

6. Amortisseur d'oscillations de torsion selon l'une des revendications 1 à 5, **caractérisé en ce que** les pattes (31) de masselottes (24, 54) opposées sur la bride (22) font saillie à chaque fois dans la direction axiale en avant de la bride.

7. Amortisseur d'oscillations de torsion selon l'une des revendications précédentes, **caractérisé en ce qu'**un moyen (42, 52) pour rehausser le centre de gravité est au moins un évidement (42, 52) qui est réalisé dans l'au moins une masselotte et qui s'étend dans la direction radiale.

8. Amortisseur d'oscillations de torsion selon la revendication 7, **caractérisé en ce qu'**une pluralité d'évidements (42, 52) sont disposés dans la masselotte (44, 54).

9. Amortisseur d'oscillations de torsion selon la revendication 7 ou 8, **caractérisé en ce que** l'au moins un évidement (42, 52) est réalisé dans la région de bord de la masselotte (44, 54) située radialement à l'intérieur.
